# DEMANDE DE BREVET EUROPEEN

(11) **EP 0 684 453 A1**
(43) Date de publication de la demande: **29.11.1995**
(21) Numéro de dépôt: 95401223.3
(22) Date de dépôt: 24.05.1995
(51) Int. Cl.: G01D 5/04

(54) **Mécanisme de transmission et d'amplification de déplacement**

(30) Priorité: 26.05.1994 FR 9406385
(71) Demandeur: JULES RICHARD INSTRUMENTS S.A., F-95100 Argenteuil (FR)
(72) Inventeur: Schaller, André Henri, F-92110 Clichy (FR)
(74) Mandataire: Colas, Jean-Pierre

(57) **Abrégé**

Le mécanisme commande la position angulaire d'un organe rotatif (3,11) en fonction de la position de l'objet (1,2), et qui comprend des moyens de réglage d'une position d'origine de l'organe correspondant à une position initiale prédéterminée de l'objet, et de l'amplification du déplacement de l'organe par rapport à celui de l'objet. Lesdits moyens comprennent (a) des première (7) et deuxième (8) bielles de même longueur articulées l'une sur l'autre à une extrémité (9) et connectées, à l'autre extrémité, à l'organe (3,11) et à l'objet (1), respectivement, (b) des moyens (9,10,12) pour aligner les autres extrémités des deux bielles (7,8) en présence d'un déplacement prédéterminé de l'objet et (c) des moyens (13) pour fixer la position angulaire de la première bielle (7) sur l'organe rotatif (3,11) en fonction d'une amplification prédéterminée du déplacement de l'objet.

Application à des appareils de mesure de température, de pression, etc...

## Description

La présente invention est relative à un mécanisme de transmission et d'amplification du déplacement d'un objet et, plus particulièrement, à un appareil de mesure muni d'un tel mécanisme pour la commande de la position angulaire d'un organe rotatif en fonction de la position de l'objet, ce mécanisme comprenant des moyens de réglage d'une position d'origine de l'organe correspondant à une position initiale prédéterminée de l'objet, et de l'amplification du déplacement de l'organe par rapport à celui de l'objet.

On connaît de tels appareils de mesure comprenant un capteur sensible à une grandeur physique, telle que la température d'un corps ou la pression d'un gaz, ce capteur convertissant l'amplitude de la grandeur appliquée en un déplacement d'un objet. C'est le cas notamment du capteur bien connu sous le nom de "tube de Bourdon" dont la grandeur de sortie est la rotation d'un axe solidaire d'une extrémité du tube dans le cas d'un tube en spirale, ou le déplacement de cette extrémité dans le cas d'un tube en "C".

Les déplacements ainsi établis par les capteurs de ce type, comme de ceux d'autres types, ne sont cependant pratiquement jamais exploitables directement pour délivrer une mesure de la grandeur observée du fait, d'une part, de la faible amplitude du déplacement obtenu et, d'autre part, de la dispersion des caractéristiques de déplacement de ces capteurs, que l'on observe notamment dans les fabrications industrielles en série de ceux-ci.

C'est pourquoi les appareils de mesure munis de tels capteurs sont aussi équipés d'un mécanisme de transmission et d'amplification du déplacement, conçu pour permettre en outre le réglage de la plage de mesure de l'appareil et assurer l'uniformité des mesures délivrées par divers appareils malgré la dispersion des caractéristiques évoquées ci-dessus.

Ce mécanisme est couramment constitué par un levier dont un bras est actionné par une bielle de liaison au capteur, l'autre bras du levier étant d'une longueur telle que le déplacement de l'extrémité libre de ce bras, qui sert d'indicateur de mesure, est amplifié par rapport à celui de la sortie du capteur. D'autres mécanismes plus complexes comprennent plusieurs étages d'amplification à levier, ou à engrenages, montés en série pour accroître le gain de l'amplification.

Il convient en outre de corréler la course de la sortie du capteur, indéfinie en raison de la dispersion mentionnée ci-dessus, et celle de l'indicateur de mesure qui, elle, est parfaitement définie puisqu'elle doit permettre l'affichage et/ou l'enregistrement de la valeur mesurée. Cette corrélation exige un ajustement du gain de mécanisme de transmission et d'amplification, par correction de la longueur du bras de levier du mécanisme qui est connecté au capteur, par exemple.

Pour ce faire, après réglage d'une position initiale de l'indicateur de mesure, on applique au capteur une grandeur physique de valeur connue et on ajuste la longueur dudit bras de levier pour corriger l'écart, sur une échelle de mesure, entre la valeur appliquée et la valeur affichée par l'organe indicateur. Cette opération a malheureusement pour effet de modifier du même coup la position initiale de l'indicateur. L'obtention d'une concordance parfaite sur toute l'échelle de mesure ne peut alors être obtenue que par des approximations successives, c'est-à-dire par des essais et corrections répétés, longs et fastidieux.

La présente invention a donc pour but de réaliser un mécanisme de transmission et d'amplification qui échappe à ces inconvénients des mécanismes de la technique antérieure et qui autorise donc, dans son application à un appareil de mesure, une adaptation rapide et simple des courses de la sortie d'un capteur et d'un organe indicateur de mesure.

On atteint ces buts de l'invention, ainsi que d'autres qui apparaîtront dans la description qui va suivre, avec un mécanisme de transmission et d'amplification du déplacement d'un objet, pour la commande de la position angulaire d'un organe rotatif en fonction de la position de l'objet, ce mécanisme comprenant des moyens de réglage d'une position d'origine de l'organe correspondant à une position initiale prédéterminée de l'objet, et de l'amplification du déplacement de l'organe par rapport à celui de l'objet, le mécanisme étant remarquable en ce que lesdits moyens comprennent 1) des première et deuxième bielles de même longueurs articulées l'une sur l'autre à une extrémité et connectées, à l'autre extrémité, à l'organe et à l'objet, respectivement, 2) des moyens pour aligner les autres extrémités des deux bielles en présence d'un déplacement prédéterminé de l'objet et 3) des moyens pour fixer la position angulaire de la première bielle sur l'organe rotatif en fonction d'une amplification prédéterminée du déplacement de l'objet.

Comme on le verra dans la suite, dans son application à un appareil de mesure, le mécanisme suivant l'invention permet ainsi de régler l'amplification du déplacement de l'objet sans perturber pour autant une concordance préalablement établie entre une position d'origine de l'objet et la position correspondante de l'organe. On réduit ainsi considérablement le temps et l'expertise nécessaires au réglage de l'appareil de mesure.

Suivant une autre caractéristique du mécanisme selon l'invention, les moyens d'alignement sont constitués par des ouvertures percées dans les première et deuxième bielles, à une même distance de leur articulation commune. Ces ouvertures autorisent une mise en alignement des bielles par simple centrage visuel.

La présente invention permet ainsi de réaliser un appareil de mesure comprenant un capteur sensible à une grandeur physique pour déplacer un objet sur une distance fonction de l'amplitude de cette grandeur physique, et un organe rotatif indicateur de ladite amplitude, l'objet étant couplé à l'organe indicateur par le mécanisme suivant l'invention. L'organe indicateur est constitué d'un levier solidaire en rotation d'un axe et d'une aiguille indicatrice montée sur cet axe, ce levier et la première bielle étant articulés l'un sur l'autre à une extrémité.

A titre d'exemple non limitatif, le capteur est un tube de Bourdon commandant la rotation d'un axe solidaire d'un bras constituant l'objet dont la rotation est transmise à l'organe indicateur par le mécanisme de transmission et d'amplification selon l'invention.

Suivant l'invention, pour régler l'appareil de mesure ainsi constitué, on applique au capteur une grandeur d'une valeur initiale prédéterminée, on agit sur le montage des éléments de l'ensemble constitué par le capteur et l'objet pour aligner les première et deuxième bielles, on ajuste la position de l'organe indicateur sur une échelle de mesure de la grandeur, on applique au capteur une deuxième valeur prédéterminée de la grandeur, on ajuste la position de l'organe indicateur sur l'échelle de mesure, en autorisant une rotation de la première bielle par rapport à l'organe, et on bloque ensuite la position de cette bielle relativement à cet organe.

D'autres caractéristiques et avantages de la présente invention apparaîtront à la lecture de la description qui va suivre et à l'examen du dessin annexé dans lequel :
- la figure 1 est un schéma permettant d'expliquer le principe du mécanisme suivant la présente invention,
- la figure 2 est une vue perspective partielle d'un appareil de mesure équipé du mécanisme suivant l'invention, dans une phase initiale de son réglage, et
- la figure 3 est une vue analogue à celle de la figure 2, dans une phase ultérieure du réglage de l'appareil.

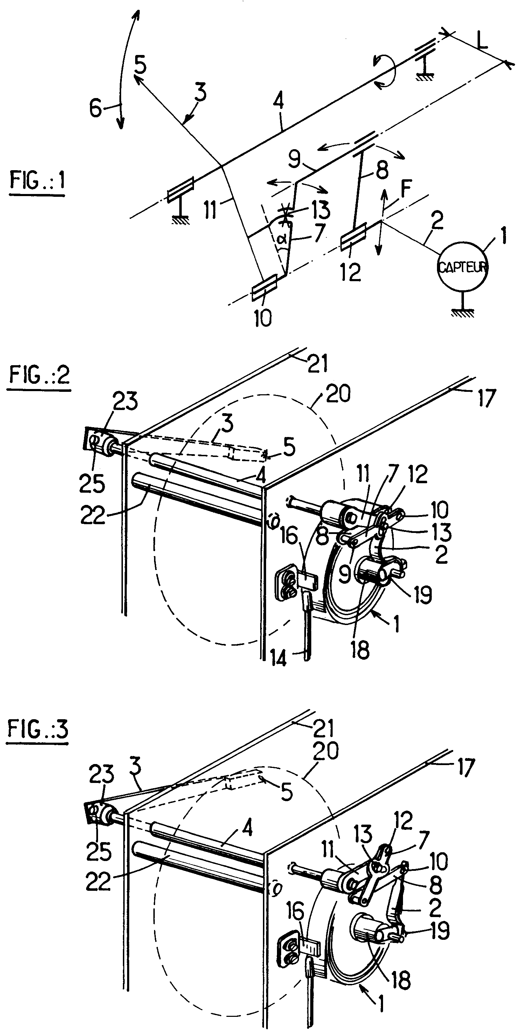

On se réfère au schéma du mécanisme suivant l'invention représenté à la figure 1. Un capteur 1, de tout type connu, un tube de Bourdon par exemple, est sensible à une grandeur physique d'entrée pour convertir l'amplitude de cette grandeur en un déplacement de l'extrémité d'un objet tel qu'un bras 2, suivant la direction de la double flèche F. Le mécanisme que l'on va décrire dans la suite a pour objet de transmettre ce déplacement à un organe indicateur tel qu'une aiguille 3 tournant autour d'un axe 4 et dont l'extrémité 5 est agencée pour balayer une échelle graduée de mesure 6 de la grandeur physique (pression ou température) appliquée au capteur 1.

Suivant la présente invention, le mécanisme comprend des première 7 et deuxième 8 bielles de même longueur articulées l'une sur l'autre à une extrémité autour d'un axe 9. La première bielle 7 s'articule en 10, à son autre extrémité, sur un levier 11 solidaire en rotation de l'aiguille 3 autour de l'axe 4. La deuxième bielle 8 s'articule en 12, à son autre extrémité, sur le bras 2 du capteur 1. Suivant l'invention encore, la première bielle 7 et le levier 11 sont mobiles l'un par rapport à l'autre dans des plans parallèles, leur écart angulaire α pouvant être fixé à une valeur choisie à l'aide de moyens de fixation schématiquement représentés en 13.

La distance L qui sépare les axes 4 et 9 correspond à la longueur d'un "bras de levier" qui définit le gain de l'amplification du déplacement de l'extrémité 5 de l'aiguille 3 par rapport au déplacement de l'articulation 12 connectée au bras de sortie 2 du capteur 1. Suivant l'invention, après avoir desserré les moyens de fixation 13, on peut faire varier l'angle α et ainsi la distance L, pour régler le gain du mécanisme.

Pour adapter la course de l'extrémité du bras 2 du capteur suivant la direction de la flèche F, à celle de l'extrémité 5 de l'aiguille 3 sur l'échelle graduée 6, on procède, suivant l'invention, de la manière suivante.

Dans un premier temps, on applique au capteur une grandeur physique de valeur prédéterminée connue, constituant par exemple une valeur initiale ou moyenne d'un domaine de mesure gradué sur l'échelle 6. Le bras 2 prend alors une position dans laquelle les articulations 10 et 12 sont normalement non alignées.

Suivant la présente invention, dans un deuxième temps, on aligne ces deux articulations comme représenté à la figure 1, en faisant tourner l'une des bielles 7,8 par rapport à l'autre autour de l'axe commun 9. Pour ce faire, on peut agir soit sur la position du capteur 1 pour déplacer du même coup le bras 2, soit sur la position du levier 11 et de l'aiguille 3. Dans cette dernière hypothèse, on corrige la position de l'aiguille 3 en la faisant tourner autour de l'axe 4, indépendamment du levier 11, pour qu'elle affiche alors sur l'échelle 6 la valeur initiale connue de la grandeur physique appliquée au capteur 1.

Suivant une caractéristique essentielle du mécanisme selon l'invention, il apparaît alors que l'on peut modifier la distance L, soit le gain d'amplification, en faisant basculer ensemble les bielles 7,8 autour des articulations 10,12 alors coaxiales. Très avantageusement, le réglage du gain du mécanisme s'opère alors sans perturber en rien la correspondance préalablement établie entre la position initiale du bras 2 du capteur et la position correspondante de l'aiguille 3 sur l'échelle graduée. En effet, les rotations concomitantes des bielles 7,8 autour des articulations 10,12, dans la position représentée à la figure 1, ne changent pas les positions du bras 2 et du levier 11.

On se réfère maintenant aux figures 2 et 3 du dessin annexé pour décrire un appareil de mesure équipé d'un mécanisme conforme à celui schématisé à la figure 1, et un procédé de réglage de cet appareil. A ces figures, des références numériques identiques à des références utilisées sur la figure 1 désignent des organes identiques ou similaires.

L'appareil décrit, à titre illustratif et non limitatif, sert à mesurer la température d'un gaz à l'aide d'une sonde de température (non représentée) raccordée par un tube 14 à une extrémité d'un tube plat en spirale 1, du type "de Bourdon" bien connu dans la technique. Le tube 1 est soudé sur une équerre 16 elle-même fixée sur une platine 17 par une liaison à vis et boutonnières comme représentée. L'autre extrémité du tube 1 est solidaire d'un axe 18 perpendiculaire à la platine 17 et qui tourne quand la pression dans le tube 1 varie, comme il est bien connu. Un bras incurvé 2 est fixé par une extrémité à l'axe 18, grâce à une douille 19 et il est articulé, à son autre extrémité, sur une bielle 8 elle-même articulé en 9 sur une autre bielle 7 de même longueur, comme les bielles correspondantes de la figure 1. Un levier coudé 11 est fixé par une douille sur un axe 4, à une extrémité et il est articulé sur la bielle 7 à son autre extrémité, tout comme le levier 11 de la figure 1.

Au niveau de son coude, le levier 11 comprend un filetage pour une vis 13 traversant une boutonnière incurvée percée dans la bielle 7 et centrée sur l'articulation 10 de cette bielle sur le levier 11. Le serrage de la vis 13 permet de bloquer la bielle 7 et le levier 11 dans une position angulaire relative prédéterminée, tout comme les moyens de fixation 13 de la figure 1.

L'appareil représenté aux figures 2 et 3 permet d'enregistrer l'évolution des mesures de températures dans le temps, sur un disque enregistreur 20 entraîné par un mécanisme d'horlogerie (non représenté), au niveau d'une deuxième platine 21 maintenue à une distance prédéterminée de la première platine 17 par une ou plusieurs entretoises 22. L'extrémité 5 de l'aiguille 3 est alors munie d'un stylet encré, comme il est bien connu. L'aiguille 3 est montée sur l'axe 4 à l'aide d'une douille 23 bloquée sur cet axe par une vis 25. On comprend que la longueur de l'aiguille indicatrice 3 est telle que son extrémité 5 se déplace selon un arc de cercle passant par le centre du disque qui porte des graduations adaptées à ce déplacement.

Il ressort de ce qui précède, que l'on retrouve le mécanisme de la figure 1 dans l'appareil des figures 2 et 3. Ce mécanisme trouve avantageusement application dans cet appareil en ce qu'il permet un réglage facile et rapide de celui-ci, à la sortie d'une chaîne de fabrication.

Le procédé de réglage de l'appareil des figures 2 et 3 s'établit alors comme suit : après avoir placé la sonde de température dans une ambiance à température connue (de la glace fondante par exemple), on procède à l'alignement des bielles 7 et 8. Pour ce faire, des moyens d'alignement sont prévus sur celles-ci. Avantageusement, ces moyens peuvent être constitués par des ouvertures percées dans les articulations 10 et 12. On peut alors procéder à l'alignement de ces ouvertures par centrage visuel ou assisté par des moyens optiques tels qu'un faisceau lumineux. Le centrage peut être assuré et maintenu provisoirement à l'aide d'une goupille passée dans les deux ouvertures.

Pour obtenir ce centrage, on peut amener la bielle 8 en coïncidence avec la bielle 7 en agissant sur le bras 2 après avoir desserré la douille 19 montée sur l'axe 18 et/ou en agissant sur l'équerre 16, après avoir desserré les vis qui traversent les boutonnières percées dans cette équerre. Ces boutonnières sont dimensionnées pour donner deux degrés de liberté à l'équerre sur la platine 17.

On peut aussi agir sur la bielle 7 après avoir établi une liaison à simple frottement entre celle-ci et le bras 11, au niveau de la vis 13, ou même sur le bras 11 lui-même monté sur l'axe 4 par une douille à vis de blocage (non représentée).

Une fois l'alignement obtenu, on porte la sonde à une deuxième température écartée de la première et se situant de préférence à une extrémité du domaine de mesure de l'appareil. La rotation qui s'ensuit de l'axe 18 du capteur provoque le désalignement des bielles 7,8 illustrées à la figure 3 et la rotation de l'axe 4 de l'aiguille. Si l'extrémité 5 de celle-ci ne se trouve pas alors en face de la graduation correspondant à la température de la sonde on agit, suivant la présente invention, sur les positions respectives de la bielle 7 et du levier coudé 11, ce qui est autorisé par la liaison à frottement établie par la vis 13. On peut faire tourner ainsi l'axe 4 et l'aiguille 3 jusqu'à une position où l'extrémité 5 de celle-ci se trouve en face de la graduation correspondant à la température (connue) de la sonde. On serre alors la vis 13 pour bloquer la bielle 7 sur le levier coudé 11.

Il est clair que si la température de la sonde retombe ensuite à la valeur initiale établie lors de la phase de réglage illustrée à la figure 2, les bielles 7 et 8 reviennent en alignement et l'aiguille retombe exactement à la position initiale alors réglée. La correspondance des courses de l'extrémité du bras 2 de sortie du capteur et de l'extrémité 5 de l'aiguille est alors parfaitement établie, avec suppression des approximations successives longues et fastidieuses utilisées à cet effet dans la technique antérieure.

On remarquera que le fonctionnement du mécanisme suivant l'invention est basé sur un principe purement cinématique, ce qui suppose que les masses des pièces constituant ce mécanisme puissent être considérées comme négligeables et n'influent pas sensiblement sur sa dynamique.

Bien entendu l'invention n'est pas limitée au mode de réalisation décrit et représenté qui n'a été donné qu'à titre d'exemple. C'est ainsi que les ouvertures percées dans les articulations 10,12 pour permettre l'alignement des bielles 7,8 pourraient être percées dans ces bielles plus près de l'axe 9, à la même distance de celui-ci. De même, l'invention trouve aussi application dans un appareil de mesure de pression, équipé d'un tube de Bourdon en arc par exemple plutôt qu'en spirale, dans des thermomètres à bilame, dans des hygromètres à cheveu ou à fil synthétique et, plus généralement encore, dans tout système du type bielle-manivelle exigeant un réglage de course.

## Revendications

1. Mécanisme de transmission et d'amplification du déplacement d'un objet, pour la commande de la position angulaire d'un organe rotatif (3,11) en fonction de la position de l'objet (1,2), ce mécanisme comprenant des moyens de réglage d'une position d'origine de l'organe correspondant à une position initiale prédéterminée de l'objet, et de l'amplification du déplacement de l'organe par rapport à celui de l'objet, caractérisé en ce que lesdits moyens comprennent (a) des première (7) et deuxième (8) bielles de même longueur articulées l'une sur l'autre à une extrémité (9) et connectées, à l'autre extrémité, à l'organe (3,11) et à l'objet (1), respectivement, (b) des moyens (9,10,12) pour aligner les autres extrémités des deux bielles (7,8) en présence d'un déplacement prédéterminé de l'objet et (c) des moyens (13) pour fixer la position angulaire de la première bielle (7) sur l'organe rotatif (3,11) en fonction d'une amplification prédéterminée du déplacement de l'objet.

2. Mécanisme conforme à la revendication 1, caractérisé en ce que les première (7) et deuxième (8) bielles sont articulées sur l'organe (3,11) et l'objet (1,2), respectivement.

3. Mécanisme conforme à la revendication 2, caractérisé en ce que les moyens (13) pour fixer la position angulaire de la première bielle (7) sur l'organe rotatif (3,11) sont constitués par une liaison à boutonnière traversée par une vis de blocage.

4. Mécanisme conforme à l'une quelconque des revendications 1 à 3, caractérisé en ce que les moyens d'alignement sont constitués par des ouvertures percées dans les première (7) et deuxième (8) bielles, à une même distance de leur articulation commune.

5. Mécanisme conforme à la revendication 4, caractérisé en ce que lesdites ouvertures sont propres à recevoir une goupille de centrage de ces ouvertures l'une sur l'autre.

6. Mécanisme conforme à l'une quelconque des revendications 4 et 5, caractérisé en ce que lesdites ouvertures sont coaxiales aux articulations (10,12) des première (7) et deuxième (8) bielles sur l'organe et l'objet, respectivement.

7. Appareil de mesure comprenant un capteur (1) sensible à une grandeur physique pour déplacer un objet (2) sur une distance fonction de l'amplitude de cette grandeur physique, et un organe rotatif (3,4,11) indicateur de ladite amplitude, caractérisé en ce que l'objet (2) est connecté à l'organe indicateur (3,4,11) par un mécanisme conforme à l'une quelconque des revendications 1 à 6.

8. Appareil conforme à la revendication 7, caractérisé en ce que l'organe indicateur (3,4,11) est constitué d'un levier (11) solidaire en rotation d'un axe (4), et d'une aiguille indicatrice (3) montée sur cet axe, ce levier (11) et la première bielle (7) étant articulés l'un sur l'autre à une extrémité (10).

9. Appareil conforme à la revendication 8, caractérisé en ce que le capteur (1) est un tube de Bourdon commandant la rotation d'un axe (18) solidaire d'un bras (2) constituant l'objet dont la rotation est transmise à l'aiguille indicatrice (3) par le mécanisme de transmission et d'amplification.

10. Appareil conforme à la revendication 9, caractérisé en ce que ledit bras (2) est monté sur ledit axe (18) par l'intermédiaire d'une douille (19) bloquée par une vis sur cet axe (18).

11. Appareil conforme à l'une quelconque des revendications 9 et 10, caractérisé en ce que le tube de Bourdon est fixé sur une platine de montage (17) par une liaison à vis (16) à deux degrés de liberté dans le plan de la platine.

12. Appareil conforme à l'une quelconque des revendications 7 à 11, caractérisé en ce qu'il comprend des moyens d'enregistrement des variations dans le temps de la grandeur physique mesurée, sur un support d'enregistrement (20) en forme de disque.

13. Appareil conforme à l'une quelconque des revendications 9 à 12, adapté à la mesure de la température d'un corps.

14. Appareil conforme à l'une quelconque des revendications 9 à 12, adapté à la mesure de la pression d'un gaz.

15. Appareil conforme à l'une quelconque des revendications 7 et 8, adapté à la mesure de l'humidité d'un gaz.

16. Procédé de réglage de l'appareil conforme à l'une quelconque des revendications 7 à 15, caractérisé en ce qu'on applique au capteur (1) une grandeur physique d'une valeur initiale prédéterminée, on agit sur le montage des éléments de l'ensemble constitué par le capteur (1) et l'objet (2) pour aligner les première (7) et deuxième (8) bielles, on ajuste la position de l'organe indicateur (3,4,11) sur une échelle de mesure (6) de la grandeur, on applique au capteur (1) une deuxième valeur prédéterminée de la grandeur, on ajuste la position de l'organe indicateur (3,4,11) sur l'échelle de mesure (6) par une rotation relative de la première bielle (7) par rapport à l'organe (3,4,11), et on bloque ensuite la position de cette bielle (7) relativement à cet organe.
